# EUROPÄISCHE PATENTANMELDUNG

(11) **EP 2 911 278 A2**
(43) Veröffentlichungstag der Anmeldung: **26.08.2015**
(21) Anmeldenummer: 14193414.1
(22) Anmeldetag: 17.11.2014
(51) Int. Cl.: H02K 11/02, F04D 13/06

(54) **Kreiselpumpenmotor**

(30) Priorität: 28.01.2014 DE 102014201491
(71) Anmelder: Bühler Motor GmbH, 90459 Nürnberg (DE)
(72) Erfinder: GIESELMANN, Heinz, 90403 Nürnberg (DE); PARTHIER, Rico, 90439 Nürnberg (DE)

(57) **Zusammenfassung**

Die Erfindung betrifft einen Kreiselpumpenmotor (1) mit einem positiven elektrischen Anschluss (70), einem negativen elektrischen Anschluss (69), einem aus einem spritzgusstechnisch verarbeitbarem Kunststoffmaterial bestehenden nichtleitenden Motorgehäuse (44), einem im Motorgehäuse (44) aufgenommenen bewickelten Stator (4), einem drehbar gelagerten permanentmagnetischen Rotor (5) und eine Leiterplatte (14), wobei der Stator (4) im Wesentlichen aus einem genuteten Statorkern (8) und einer Statorwicklung (11) besteht und die Leiterplatte (14) eine Motorsteuerung (75) enthält. Aufgabe der Erfindung ist es bei einem gattungsgemäßen Kreiselpumpenmotor auf einfache und wirtschaftliche Weise für eine ausreichende Bedämpfung von hochfrequenten Störströmen und damit der Bedämpfung von elektromagnetischen Störaussendungen zu sorgen. Diese Aufgabe wird dadurch gelöst, dass der negative elektrische Anschluss (69) und der positive elektrische Anschluss (70) jeweils über einen Y-Kondensator (71, 72) mit dem Statorkern (8) elektrisch verbunden sind.

## Beschreibung

Die Erfindung betrifft einen Kreiselpumpenmotor (1) mit einem positiven elektrischen Anschluss (70), einem negativen elektrischen Anschluss (69), einem aus einem spritzgusstechnisch verarbeitbarem Kunststoffmaterial bestehenden nichtleitenden Motorgehäuse (44), einem im Motorgehäuse (44) aufgenommenen bewickelten Stator (4), einem drehbar gelagerten permanentmagnetischen Rotor (5) und eine Leiterplatte (14), wobei der Stator (4) im Wesentlichen aus einem genuteten Statorkern (8) und einer Statorwicklung (11) besteht und die Leiterplatte (14) eine Motorsteuerung (75) enthält.

Zur Reduktion der üblichen hochfrequenten Störaussendungen werden unter anderem sogenannte Y-Kondensatoren von jeder Versorgungsleitung bzw. jedem Versorgungsanschluss eines Gleichstrom-Motors zum metallischen Gehäuse geschalten. Das dient dazu die sogenannten Gleichtaktstörungen über das metallische Gehäuse eines Gleichstrommotors auf kurzem Wege zur Quelle dieser Störungen im Motor zurück zu leiten, wodurch eine Störabstrahlung dieser Gleichtaktstörungen unterdrückt bzw. bedämpft werden kann.

Ohne metallisches Gehäuse entfällt die Möglichkeit Kondensatoren elektrisch wirksam an ein Motorgehäuse zu kontaktieren, wenn das Gehäuse elektrisch nichtleitend ist.

Kunststoffgehäuse haben zudem keinerlei elektromagnetische Schirmwirkung, d.h. von den Statorwicklungen und vom Statorblechpaket mit den Wickelhörnern können elektromagnetische Wellen in die Umgebung abgestrahlt werden.

Aufgrund der großen Nähe der Statorwicklungen zu den Statorhörnern können die in den Wicklungen durch das schnelle Schalten der Phasenströme entstehenden hochfrequenten Störungen kapazitiv in die Statorbleche übertragen werden. Da ein Statorblechpaket in einem Motor mit Kunststoffgehäuse potentialfrei ist, können diese kapazitiv eingekoppelten Störungen nicht abgeleitet werden und führen daher zu einer unerwünschten Abstrahlung elektromagnetischer Wellen.

Aufgabe der Erfindung ist es bei einem gattungsgemäßen Kreiselpumpenmotor auf einfache und wirtschaftliche Weise für eine ausreichende Bedämpfung von hochfrequenten Störströmen und damit der Bedämpfung von elektromagnetischen Störaussendungen zu sorgen.

Diese Aufgabe wird erfindungsgemäß durch das Kennzeichen des Anspruchs 1 gelöst. Der negative elektrische Anschluss und der positive elektrische Anschluss werden jeweils über einen Y-Kondensator mit dem Statorkern elektrisch verbunden. Die Y-Kondensatoren zwischen den Versorgungsleitungen und dem Statorblechpaket schließen einen Stromkreis für hochfrequente Störströme, die andernfalls ohne die kurze Rückleitung zur Störquelle in der Leistungsstufe der Motorsteuerung zur Störabstrahlung vom Stator führen würden. Mit dieser beschriebenen Art der Bedämpfung der Störaussendungen kann u.U. auf kostenintensive Schirmungsmaßnahmen verzichtet werden.

Weiterbildungen der Erfindung werden anhand der Unteransprüche näher dargestellt. Besonders vorteilhaft bzgl. der Bedämpfung der unerwünschten Störaussendungen wirken solche Kondensatoren, wenn sie zwischen der Leistungsstufe einer Motorsteuerung und einem üblichen EMV-Filter aus Drosseln und weiteren Kondensatoren geschalten werden. Es ist aber auch möglich die Y-Kondensatoren zwischen den Eingängen und einem EMV-Filter zu schalten.

Desweiteren ist es vorteilhaft die elektrischen Verbindungen der Kondensatoren zum Statorblechpaket mit möglichst niedriger Hochfrequenz-Impedanz auszuführen, um eine starke Bedämpfung der Störaussendungen zu bewirken.

Eine bevorzugte Ausführung zur Kontaktierung des Stators besteht darin, dass zwischen der Leiterplatte und dem Statorkern eine elektrische Verbindung besteht, die über ein Kontaktmittel hergestellt ist. Dabei sind im Leiterplattenlayout der Leiterplatte die elektrischen Verbindungsleitungen zu den Y-Kondensatoren vorgesehen und die Y-Kondensatoren auf der Leiterplatte angeordnet. Somit ist nur ein einziges Kontaktmittel notwendig.

In Weiterbildung dieser Ausführungsform ist das Kontaktmittel in einem Isolierstoffkörper des Stators fixiert und am mit einem Kratzkontaktabschnitt versehen, welcher mit dem Statorkern elektrisch verbunden ist. Die Montage dieses Kontaktmittels ist auf sehr einfache Weise möglich und die Kontaktsicherheit sehr hoch.

Eine noch höhere Kontaktsicherheit lässt sich erzielen, wenn das Kontaktmittel am Stator verlötet oder verschweißt ist.

Das Kontaktmittel lässt sich am einfachsten herstellen, wenn es ein ausgestanztes und umgeformtes Leitblech ist.

Häufig werden gestapelte Blechpakete als Statorkerne verwendet. Diese weisen hervorragende magnetische Eigenschaften auf und lassen sich besonders einfach herstellen. Blechpakete sind zur Verringerung von Wirbelströmen und einer damit einhergehenden Wärmeentwicklung untereinander flächig elektrisch Isoliert. Unter EMV-Gesichtspunkten ist diese Isolierung jedoch nicht nur vorteilhaft, sondern kann auch eine erhöhte Störaussendung begünstigen. Daher wird vorgeschlagen, dass eine große Anzahl, von Einzelblechen über ihren Rand elektrisch miteinander verbunden werden. Dies kann über das Kontaktmittel realisiert werden indem dieses entsprechend dimensioniert ist oder durch eine Schweißnaht, z.B. einer Laserschweißnaht, die vorzugsweise achsparallel an einem Randbereich des Blechpakets verläuft. Im Idealfall werden alle Einzelbleche miteinander elektrisch verbunden. Bei stanzpaketierten Blechpaketen können aus der Blechebene vortretende Vorsprünge, die in entsprechende Rücksprünge eingreifen bereits eine ausreichende elektrische Verbindung der Bleche untereinander bewirken.

Die beschriebene Erfindung lässt sich sowohl auf eine Kreiselpumpe mit Innenstator und Außenrotor oder eine Kreiselpumpe mit Außenstator und Innenrotor anwenden.

Ausführungsbeispiele der Erfindung werden nachfolgend anhand der Zeichnung näher erläutert. Es zeigen:
Fig. 1 eine vereinfachte Entstörschaltung gemäß dem Stand der Technik,
Fig. 2a eine erfindungsgemäße Entstörschaltung,
Fig. 2b eine Variante zu Fig. 2a,
Fig. 3 eine Axialansicht eines Stators eines Kreiselpumpenmotors,
Fig. 4 einen Schnitt durch den Stator aus Fig. 3,
Fig. 5 eine Detailansicht eines Kontaktmittels,
Fig. 6 eine dreidimensionale Darstellung des Kontaktmittels,
Fig. 7 eine Variante zu Fig. 6 und
Fig. 8 eine Schnittansicht eines Kreiselpumpenmotors.

Hinweis: Bezugszeichen mit Apostroph und entsprechende Bezugszeichen ohne Apostroph bezeichnen namensgleiche Einzelheiten in den Zeichnungen und der Zeichnungsbeschreibung. Es handelt sich dabei um die Verwendung in einer anderen Ausführungsform und/oder die Einzelheit ist eine Variante. Die Ansprüche, die Beschreibungseinleitung, die Bezugszeichenliste und die Zusammenfassung enthalten der Einfachheit halber nur Bezugszeichen ohne Apostroph.

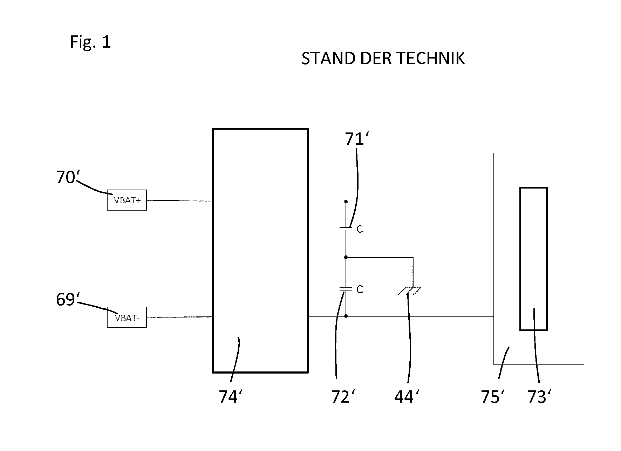

Fig. 1 zeigt eine vereinfachte Entstörschaltung gemäß dem Stand der Technik, mit einem negativen Anschluss 69', einem positiven Anschluss 70', einem EMV-Filter 74', einem ersten Y-Kondensator 71', einem zweiten Y-Kondensator 72' und einer Leistungsstufe 73' einer Steuerschaltung 75'. Der EMV-Filter 74' ist zwischen die Anschlüsse 69', 70' geschaltet. Der erste Y-Kondensator 71' ist zwischen dem positiven Anschluss 70' und einem Motorgehäuse 44' und der zweite Y-Kondensator zwischen dem negativen Anschluss 69' und dem Motorgehäuse 44' geschaltet, wobei zwischen den Y-Kondensatoren 71' bzw. 72' und den Anschlüssen 70' bzw. 69' der EMV-Filter 74' geschaltet ist.

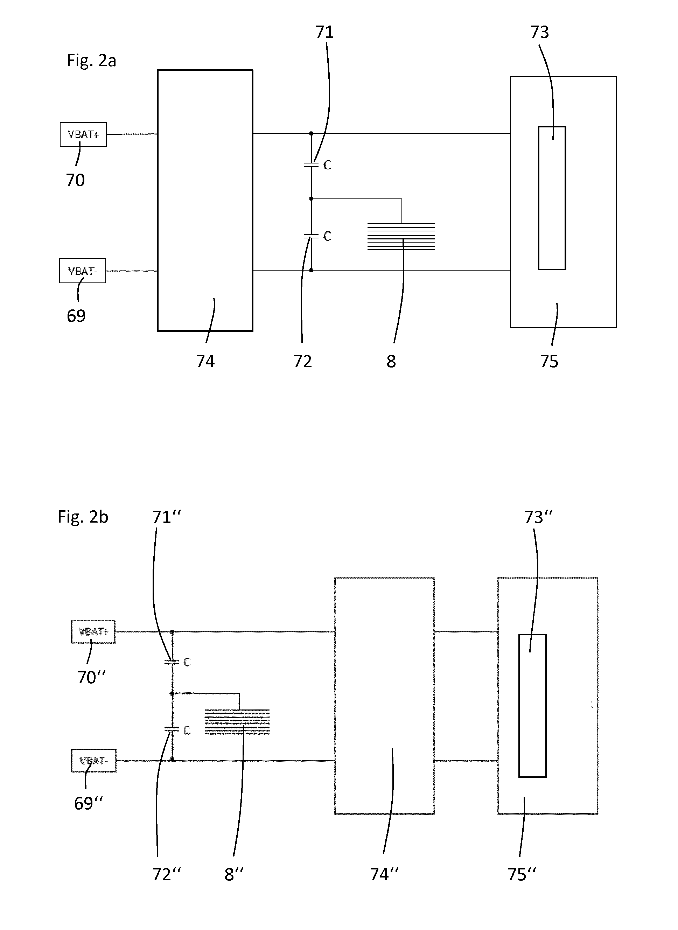

Fig. 2a zeigt eine vereinfachte Entstörschaltung gemäß der Erfindung, mit einem negativen Anschluss 69, einem positiven Anschluss 70, einem EMV-Filter 74, einem ersten Y-Kondensator 71, einem zweiten Y-Kondensator 72 und einer Leistungsstufe 73 einer Steuerschaltung 75. Der EMV-Filter 74 ist zwischen die Anschlüsse 69, 70 und die Motorsteuerung 75 geschaltet. Der erste Y-Kondensator 71 ist zwischen dem positiven Anschluss 70 und einem Statorkern 8 und der zweite Y-Kondensator zwischen dem negativen Anschluss 69 und dem Statorkern 8 geschaltet, wobei zwischen den Y-Kondensatoren 71 bzw. 72 und den Anschlüssen 70 bzw. 69 der EMV-Filter 74 geschaltet ist.

Fig. 2b zeigt eine Variante zu Fig. 2a, wobei zwei Y-Kondensatoren 71" und 72" zwischen Anschlüssen (negativer elektrischer Anschluss 69" und positiver elektrischer Anschluss 70") und einem EMV-Filter 74" aus Drosseln und weiteren Kondensatoren geschaltet sind. Der erste Y-Kondensator 71" ist zudem zwischen dem positiven Anschluss 70" und einem Statorkern 8" und der zweite Y-Kondensator zwischen dem negativen Anschluss 69" und dem Statorkern 8" geschaltet. Der EMV-Filters 74" ist weiter mit einer eine Leistungsstufe 73" enthaltende Steuerschaltung 75" verbunden.

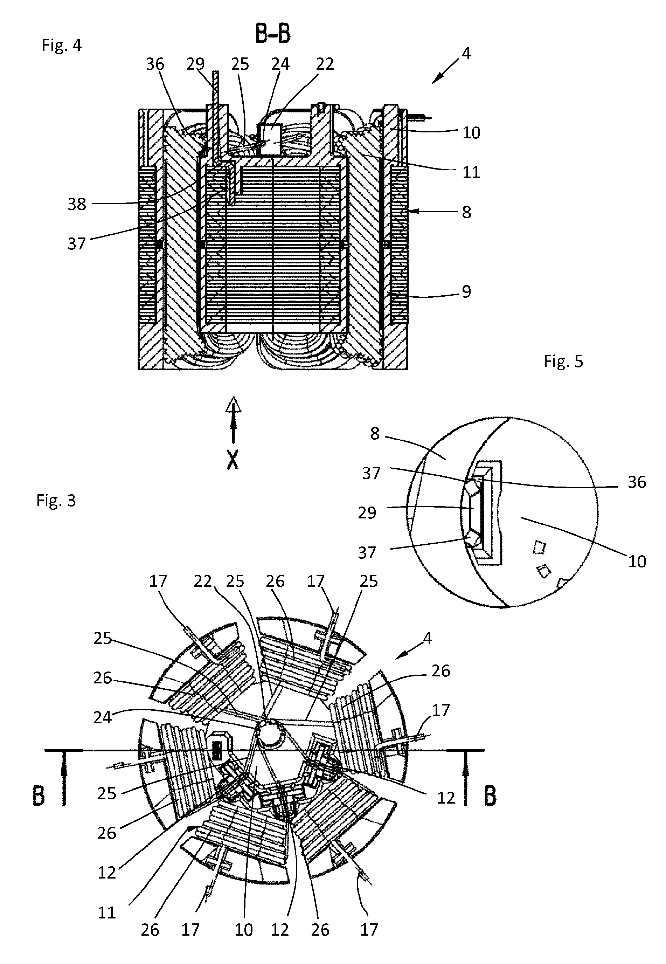

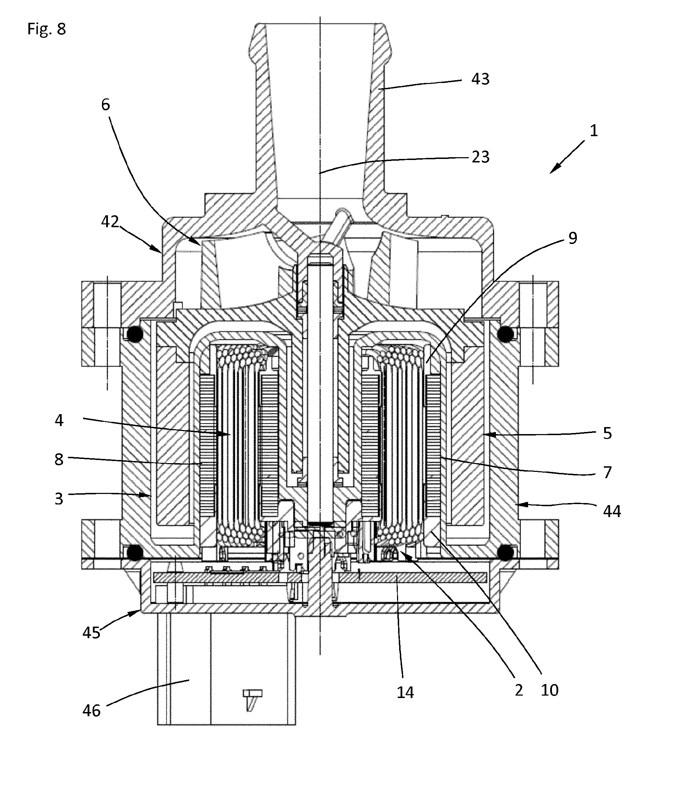

Fig. 3 ist eine Axialansicht eines als Innenstator ausgeführten Stators 4, mit einem pumpenfernen Isolierstoffkörper 10, darauf gewickelte Spulen 26, welche eine Statorwicklung 11 bilden, einem aus dem pumpenfernen Isolierstoffkörper 10 vorspringenden Zapfen 22, der eine Drahtaufnahmerille 24 aufweist, um Wickeldrahtabschnitte 25 aufzunehmen und zu ordnen, welche über die Stirnseite des pumpenfernen Isolierstoffkörpers 10 verlaufen und mit Phasen-Anschlussmitteln 12 elektrisch verbunden sind. Der Zapfen 22 ist exzentrisch in Bezug auf eine zentrale Drehachse (siehe Fig. 8) gegenüber den Phasen-Anschlussmitteln 12 angeordnet. Weiter sind Sternpunkt-Wicklungsenden 17 zu erkennen, die sich radial erstrecken und über Klemm-Schneid-Verbindungen mit einem hier nicht zu erkennenden Sternpunkt-Leitblech elektrisch verbunden sind.

Fig. 4 zeigt beispielhaft einen Schnitt durch die Linie B-B des Stators 4 aus Fig. 3, in der ein Kontaktmittel 29 zwischen der hier nicht gezeigten Leiterplatte und einem Statorkern 8 dargestellt ist. Das Kontaktmittel 29 ist in einem Leiterkanal 36 des pumpenfernen Isolierstoffkörpers 10 aufgenommen, und weist eine Kröpfung 38 und Kratzkontaktabschnitte 37 auf. Weiter ist in Fig. 4 die Wicklung 11, ein pumpennaher Isolierstoffkörper 9, der Zapfen 22 und die Drahtaufnahmerille 24 zu erkennen.

Fig. 5 stellt einen vergrößerten Ausschnitt aus Richtung X der Fig. 4 dar, der die Anordnung und Wirkungsweise des Kontaktmittels 29 verdeutlicht. Dieses ist in einem Leiterkanal 36 im pumpenfernen Isolierstoffkörper 10 sicher aufgenommen. Die Kratzkontaktabschnitte 37 des Kontaktmittels 29 sind leicht in den Statorkern 8 eingegraben.

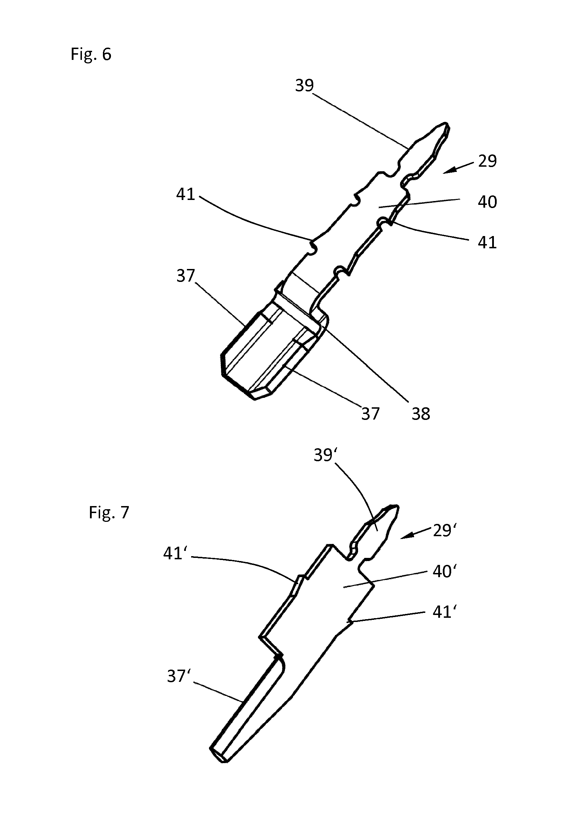

Fig. 6 zeigt eine erste Ausführungsform des Kontaktmittels 29, mit einem Halteabschnitt 40, der mit Widerhaken 41 versehen ist um sich im Isolierstoffkörper festkrallen zu können, einem Einpress-Kontaktabschnitt 39, zur festen Verbindung mit der Leiterplatte, der Kröpfung 38 und den Kratzkontaktabschnitten 37.

Fig. 7 stellt eine Variante eines Kontaktmittels 29' dar, bei dem keine Kröpfung vorhanden ist, mit dem Halteabschnitt 40', den Widerhaken 41' und nur einem Kratzkontaktabschnitt 37'.

Fig. 8 zeigt den prinzipiellen Aufbau eines Kreiselpumpenmotors 1 der dieser Erfindung zugrunde liegt, mit einem Trockenraum 2, in dem im Wesentlichen ein als Innenstator ausgeführter Stator 4 mit dem Statorkern 8, dem pumpennahen Isolierstoffkörper 9 und dem pumpenfernen Isolierstoffkörper 10 und eine Leiterplatte 14 angeordnet sind, einem Nassraum 3, in dem im Wesentlichen ein Außenrotor 5 mit einem Kreiselpumpenlaufrad 6 angeordnet sind. Der Trockenraum 2 ist vom Nassraum 3 durch eine Trennwand 7 abgedichtet. Nach Außen hin ist der Nassraum 3 durch ein Pumpengehäuse 42 mit Saugstutzen 43 begrenzt. Der Trockenraum 2 ist nach Außen hin durch einen Gehäusedeckel 45 mit Stecker 46 begrenzt. Die Trennwand 7 ist mit einem Motorgehäuse 44 einstückig ausgebildet. Der Außenrotor 5 ist um eine zentrale Drehachse 23 drehbar gelagert.

### Bezugszeichenliste

- 1: Kreiselpumpenmotor
- 2: Trockenraum
- 3: Nassraum
- 4: Stator
- 5: Rotor
- 6: Kreiselpumpenlaufrad
- 7: Trennwand
- 8: Statorkern
- 9: pumpennaher Isolierstoffkörper
- 10: pumpenferner Isolierstoffkörper
- 11: Statorwicklung
- 12: Phasen-Anschlussmittel
- 14: Leiterplatte
- 22: Zapfen
- 23: zentrale Drehachse
- 24: Drahtaufnahmerille
- 25: Wickeldrahtabschnitt
- 26: Spule
- 29: Kontaktmittel
- 36: Leiterkanal
- 37: Kratzkontaktabschnitt
- 38: Kröpfung
- 39: Einpress-Kontaktabschnitt
- 40: Halteabschnitt
- 41: Widerhaken
- 42: Pumpengehäuse
- 43: Saugstutzen
- 44: Motorgehäuse
- 45: Gehäusedeckel
- 46: Stecker
- 69: negativer Anschluss
- 70: positiver Anschluss
- 71: Y-Kondensator
- 72: Y-Kondensator
- 73: Leistungsstufe
- 74: EMV-Filter
- 75: Motorsteuerung

## Patentansprüche

1. Kreiselpumpenmotor (1) mit einem positiven elektrischen Anschluss (70), einem negativen elektrischen Anschluss (69), einem aus einem spritzgusstechnisch verarbeitbarem Kunststoffmaterial bestehenden nichtleitenden Motorgehäuse (44), einem im Motorgehäuse (44) aufgenommenen bewickelten Stator (4), einem drehbar gelagerten permanentmagnetischen Rotor (5) und eine Leiterplatte (14), wobei der Stator (4) im Wesentlichen aus einem genuteten Statorkern (8) und einer Statorwicklung (11) besteht und die Leiterplatte (14) eine Motorsteuerung (75) enthält, **dadurch gekennzeichnet, dass** der negative elektrische Anschluss (69) und der positive elektrische Anschluss (70) jeweils über einen Y-Kondensator (71, 72) mit dem Statorkern (8) elektrisch verbunden sind.

2. Kreiselpumpenmotor nach Anspruch 1, **dadurch gekennzeichnet, dass** die Y-Kondensatoren zwischen einer eine Leistungsstufe (73) umfassenden Motorsteuerung (75) und einem EMV-Filter (74) aus Drosseln und weiteren Kondensatoren geschaltet sind.

3. Kreiselpumpenmotor nach Anspruch 1, **dadurch gekennzeichnet, dass** die Y-Kondensatoren zwischen den Anschlüssen (negativer elektrischer Anschluss (69) und positiver elektrischer Anschluss (70)) und einem EMV-Filter (74) aus Drosseln und weiteren Kondensatoren geschaltet sind.

4. Kreiselpumpenmotor nach Anspruch 1, 2 oder 3, **dadurch gekennzeichnet, dass** die elektrischen Verbindungen der Y-Kondensatoren (71, 72) zum Statorkern (8) mit möglichst niedriger Hochfrequenz-Impedanz ausgeführt sind.

5. Kreiselpumpenmotor nach zumindest einem der vorangehenden Ansprüche, **dadurch gekennzeichnet, dass** zwischen der Leiterplatte (14) und dem Statorkern (8) eine elektrische Verbindung besteht, die über ein Kontaktmittel (29) hergestellt ist.

6. Kreiselpumpenmotor nach Anspruch 5, **dadurch gekennzeichnet, dass** das Kontaktmittel (29) in einem Isolierstoffkörper (10) des Stators (4) fixiert ist und einen Kratzkontaktabschnitt (37) aufweist, welcher mit dem Statorkern (8) elektrisch verbunden ist.

7. Kreiselpumpenmotor nach Anspruch 5, **dadurch gekennzeichnet, dass** das Kontaktmittel (29) am Statorkern (8) verlötet oder verschweißt ist.

8. Kreiselpumpenmotor nach Anspruch 5, 6 oder 7, **dadurch gekennzeichnet, dass** das Kontaktmittel (29) ein ausgestanztes und umgeformtes Leitblech ist.

9. Kreiselpumpenmotor nach zumindest einem der vorangehenden Ansprüche, **dadurch gekennzeichnet, dass** der Statorkern (8) aus einem gestapelten Blechpaket besteht, bei welchem die Einzelbleche untereinander flächig elektrisch isoliert sind.

10. Kreiselpumpenmotor nach Anspruch 9, **dadurch gekennzeichnet, dass** zumindest 2/3 aller Einzelbleche durch das Kontaktmittel (29) elektrisch miteinander verbunden sind.

11. Kreiselpumpenmotor nach Anspruch 9, **dadurch gekennzeichnet, dass** zumindest 2/3 aller Einzelbleche durch eine Schweißnaht miteinander elektrisch verbunden sind.

12. Kreiselpumpenmotor nach zumindest einem der Ansprüche 1 bis 11, **dadurch gekennzeichnet, dass** der Stator (4) ein Innenstator ist und der Rotor (5) ein Außenläufer.

13. Kreiselpumpenmotor nach zumindest einem der Ansprüche 1 bis 11, **dadurch gekennzeichnet, dass** der Stator (4) ein Außenstator ist und der Rotor (5) ein Innenläufer.
